**Europäisches Patentamt**

**European Patent Office**

**Office européen des brevets**

(19)

(11) Veröffentlichungsnummer: **0 555 523 B1**

(12) # EUROPÄISCHE PATENTSCHRIFT

(45) Veröffentlichungstag der Patentschrift: **28.06.95**

(51) Int. Cl.⁶: **F16F 13/00**

(21) Anmeldenummer: **92115866.3**

(22) Anmeldetag: **17.09.92**

(54) **Gummilager.**

(30) Priorität: **12.02.92 DE 4204070**

(43) Veröffentlichungstag der Anmeldung:
**18.08.93 Patentblatt 93/33**

(45) Bekanntmachung des Hinweises auf die
Patenterteilung:
**28.06.95 Patentblatt 95/26**

(84) Benannte Vertragsstaaten:
**AT DE ES FR GB IT NL SE**

(56) Entgegenhaltungen:
**EP-A- 0 440 536**
**EP-A- 0 541 902**
**DE-A- 3 423 698**
**FR-A- 2 599 799**

(73) Patentinhaber: **Firma Carl Freudenberg**
**Höhnerweg 2-4**
**D-69469 Weinheim (DE)**

(72) Erfinder: **Weltin, Uwe, Dr.**
**Jahnstrasse 24**
**W-6149 Rimbach (DE)**
Erfinder: **Freudenberg, Tillman, Dr.**
**Ortststrasse 19**
**W-6149 Fürth/Steinbach (DE)**
Erfinder: **Freudenberg, Ulrich, Dr.**
**Büttemerweg 26**
**W-6945 Hirschberg (DE)**

EP 0 555 523 B1

## Beschreibung

Die Erfindung betrifft eine Gummilager, bei dem ein flüssigkeitsgefüllter Arbeitsraum an zumindest einer Stelle seiner Wandung durch eine Blähfeder und an zumindest einer anderen Stelle seiner Wandung durch eine in Richtung des Arbeitsraumes hin- und herbewegbare Kompensationswand begrenzt ist, wobei die Kompensationswand zumindest teilweise aus einem durch magnetische Kräfte bewegbaren Werkstoff besteht und mit einem Teilbereich relativ beweglich in einen Luftspalt zwischen ein aus zwei einander gegenüberliegenden Magnetspulen gebildetes Spulenpaar hineinragt, die in zwei Spulenträgern starr gelagert und durch eine elektrische Wechselspannung erregbar sind.

Ein solches Gummilager ist aus der DE-A 34 23 698 bekannt. In dem in der Fluidkammer enthaltenen Fluid werden mittels eines Schwingungselementes, das durch Magnetspulen aktivierbar ist, pulsierende Druckschwankungen erzeugt. Mit Hilfe dieser Druckschwankungen kann man der statischen Einfederung des Lagers eine oszillierende Kontraktionsbewegung in axialer Richtung überlagern. Wird diese Bewegung nach Amplitude und Phasenlage auf von außen eingeleitete Schwingungen abgestimmt, so entsteht bezüglich dieser Schwingungen der Eindruck einer sich verringernden dynamischen Federrate des Lagers. Dabei ist allerdings zu beachten, daß die Magnetspulen zur Schwingungsisolierung abwechselnd angesteuert werden müssen, da die Spulen der Schwingungsisoliervorrichtung nur anziehende Kräfte erzeugen können. Die anziehenden Kräfte auf die Rückschlußplatte sind bei dieser Anordnung proportional zum Quadrat des Spulenstromes, so daß auch bei der geschilderten Betriebsweise ein sinusförmiger Kraftverlauf nur mit besonderen Entzerrungsmaßnahmen zu erreichen ist. Außerdem reagiert das System besonders empfindlich auf mechanische Toleranzfehler, da die beidseitigen Kräfte stark von der Spaltweite abhängen. In der gezeigten Vorrichtung sind keine Vorkehrungen getroffen, um die Kompensationswand, die als Rückschlußplatte ausgebildet ist, in ihrer Ruhestellung in der Symmetrieebene in axialer Richtung zwischen den Magnetspulen zu halten.

Der Erfindung liegt die Aufgabe zugrunde, ein solches Gummilager derart weiter zu entwickeln, daß sich eine verbesserte Schwingungsisolierung akustisch störender Schwingungen ergibt, bei vergleichsweise einfachem Aufbau und einfacher Ansteuerung des Magnetspulen und daß mechanische Toleranzen einen wesentlich verringerten Einfluß auf die Gebrauchseigenschaften des Gummilagers haben, wobei das Gummilager dadurch in wirtschaftlicher Hinsicht kostengünstiger herstellbar ist.

Außerdem soll ein Lager der eingangs genannten Art derart weiterentwickelt werden, daß die Linearitätseigenschaften der Anordnung verbessert werden, so daß ein sinusförmiges Stromsignal mit einem ebenfalls sinusförmigen, nur wenig verzerrten Kraftsignal beantwortet wird.

Diese Aufgaben werden erfindungsgemäß bei einem Gummilager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Gummilager sind die Magnetflüsse der Magnetspulen in dem Luftspalt durch den Magnetfluß zumindest eines Permanentmagneten mit zeitlich nicht veränderlichem Fluß überlagert, wobei die Magnetspulen synchron mit einer elektrischen Spannung derart angesteuert sind, daß der von dem Permanentmagnet erzeugte Magnetfluß beiderseits der Kompensationswand alternierend auf jeweils einer Seite verstärkt und auf der anderen geschwächt wird. Hierbei ist von Vorteil, daß der zeitlich nicht veränderliche Fluß (Gleichfluß) des Permanentmagneten ohne Strom und demnach auch ohne die vom Strom verursachten ohm'schen Verlustleistungen erzeugt wird. Ein weiterer Vorteil ist der geringe Aufwand an elektrischer Verkabelung.

Der Permanentmagnet kann zumindest einen Teilmagneten umfassen, der innerhalb des Teilbereiches in die Kompensationswand eingebettet ist. Der Teilmagnet ist in Richtung der Spaltebene magnetisiert. Durch diese Ausgestaltung wird ein vergleichsweise einfacher Aufbau des Gummilagers ermöglicht. Es ist vorteilhaft, das System konstruktiv so zu gestalten (gleiche Spulenträger, gleiche Luftspalte beiderseits der Kompensationswand), daß es in Ruhestellung magnetisch symmetrisch wird. Dies bedeutet insbesondere, daß sich der Fluß ØP der Permanentmagneten in zwei gleichgroße Teilflüsse 0,5 ØP verzweigt, die in die Luftspalte beiderseits der Kompensationswand gelenkt werden. Diesen permanentmagnetischen Teilflüssen überlagern sich die von den Spulen erzeugten, magnetischen Wechselflüsse ØS. Solange die weichmagnetischen Teile des Systems nicht in Sättigung geraten, kann man den Gesamtfluß, insbesondere auch in den Luftspalten, aus Gleich- und Wechselfluß additiv zusammensetzen. Hierbei werden die Spulen vom Strom vorteilhafterweise so durchflossen, daß der stromerzeugte Fluß gleichen Umlaufsinn um die Nut in den Spulenträgern hat und gleich groß ist. Man erreicht dies am einfachsten, in dem man zwei in Abmessungen und Windungszahl gleiche Spulen in Reihe schaltet. Durch diese Ausgestaltung ergibt sich in einem Luftspalt, der der Kompensationswand axial benachbart zugeordnet ist, eine Verstärkung des magnetischen Flusses, während im Luftspalt auf der anderen Seite der Kompensationswand eine Abschwächung eintritt.

Um das grundlegende Prinzip darzustellen, ist es aufschlußreich, die Kraftwirkung auf die Kompensationswand vereinfachend mathematisch zu beschreiben. Hierzu sei angenommen, daß die Kompensationswand in ihrer Mittellage fixiert ist und daß die Magnetfelder in den Luftspalten homogen sind. Die Nettokraft K ergibt sich als Differenz zweier anziehender Kräfte $K_1$ und $K_2$, die an den Grenzflächen beider Spalte angreift. Diese anziehenden Kräfte sind proportional zum Quadrat des jeweiligen Gesamtflusses, der sich wiederum aus Gleich- und Wechselanteil zusammensetzt:

$$K_1 = c \cdot \emptyset_1^2 = c \cdot (0{,}5\,\emptyset_P + \emptyset_S)^2$$
$$K_2 = c \cdot \emptyset_2^2 = c \cdot (0{,}5\,\emptyset_P - \emptyset_S)^2$$

Die Konstante c hängt im wesentlichen von der Ausgestaltung und der räumlichen Anordnung des Spulenpaares und des Permanentmagneten ab, und wie diese Bauteile relativ zueinander angeordnet sind. Es ist zweckmäßig, daß diese Daten auf beiden Seiten der Kompensationswand übereinstimmen. Bildet man nun die Differenz

$$K = K_1 - K_2$$

, so erhält man

$$K = c \cdot \emptyset_P \cdot \emptyset_S.$$

Hieraus wird deutlich, daß die Nettokraft K proportional zum Wechselfluß ist und damit proportional zum Steuerstrom auf den Spulen. Wenn wie im Betrieb die Kompensationswand aus der mittigen Lage ausgelenkt wird, so werden die nichtlinearen Kraftanteile proportional zum Quadrat des Stromes nicht mehr voll kompensiert, man kann jedoch durch die Wahl der geometrischen Verhältnisse die Linearitätsanforderungen in einem genügend großen Amplitudenbereich erfüllen.

Nach einer anderen Ausgestaltung kann der Permanentmagnet durch zwei Teilmagnete gebildet sein, die mit den Magnetspulen jeweils zu einer in sich geschlossenen Baueinheit zusammengefaßt sind. Die Baueinheit umfaßt zumindest ein magnetisches Rückschlußteil aus einem weichmagnetischen Werkstoff. Die Permanentmagnete sind in die Spulenträger eingebaut, die sich beiderseits der Kompensationswand befinden. Im Gegensatz zu den mit nur einem Permanentmagnet ausgeführten Schwingerregern ergibt sich hier die Möglichkeit, wesentlich mehr Magnetvolumen einzusetzen ohne die träge Masse der Kompensationswand zu erhöhen. Es kann mit gleichem Magnetmaterial mehr Kraft erzeugt werden oder die gleiche Kraft kann mit einem schwächeren und überproportional billigeren Magnetmaterial erhalten werden. In kreisförmigen Anordnungen können je nach Bauraum radial oder axiale magnetisierte Magnetringe eingesetzt werden.

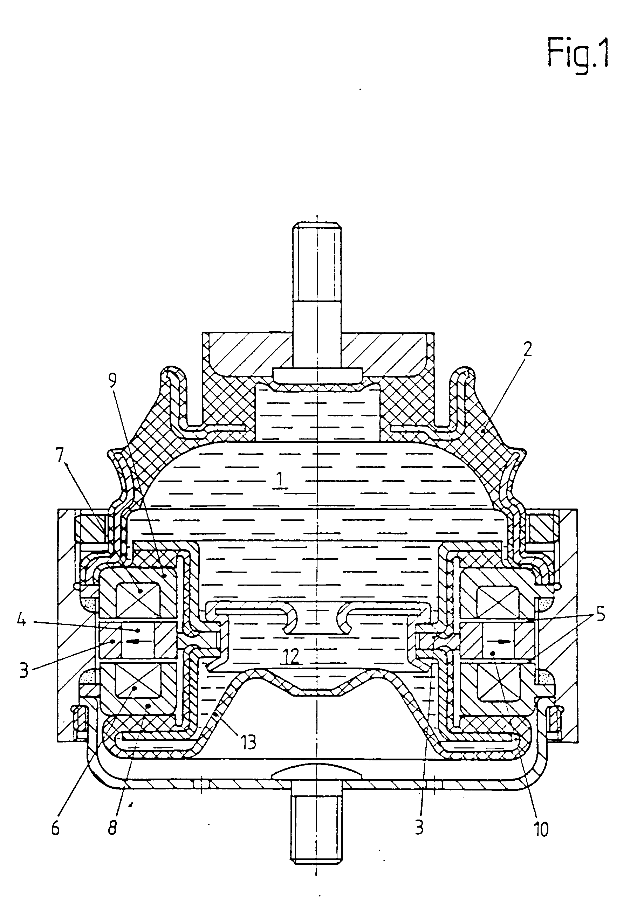

Ein Ausführungsbeispiel des erfindungsgemäßen Gummilagers ist in Figur 1 der als Anlage beigefügten Zeichnungen gezeigt und wird im folgenden näher beschrieben.

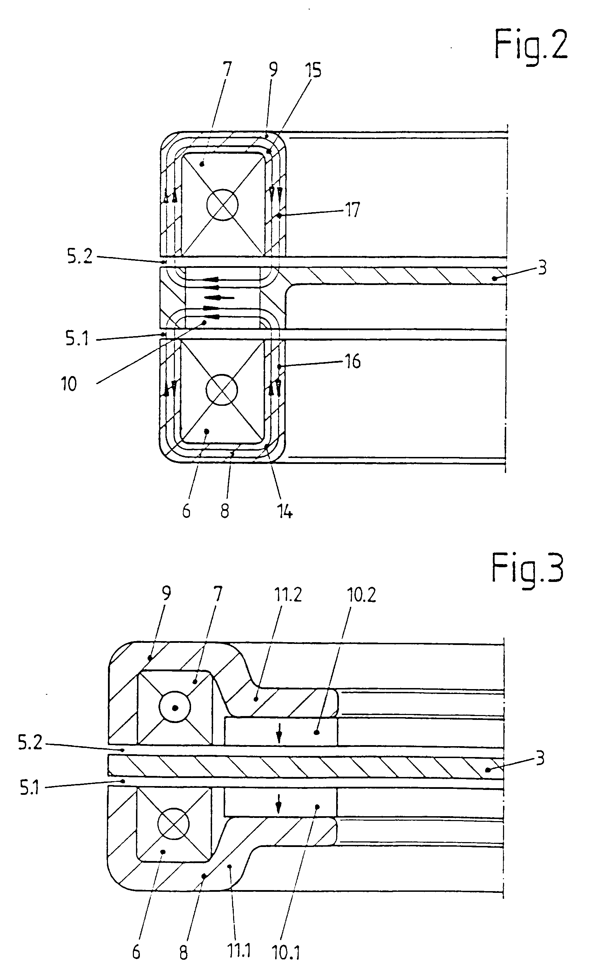

Die Figuren 2 bis 4 zeigen jeweils die Spulenträger, die Magnetspulen, die Permanentmagnete und die Kompensationswand, die in einem Lager gemäß Figur 1 enthalten sein können.

In Figur 1 ist ein erfindungsgemäßes Gummilager gezeigt, das einen flüssigkeitsgefüllten Arbeitsraum 1 enthält, der in axialer Richtung einerseits durch eine gummielastische Blähfeder 2 und andererseits durch eine in axialer Richtung hin- und herbewegbare Kompensationswand 3 begrenzt ist. Die Kompensationswand 3 ist im Bereich ihres Zentrums kreisförmig durchbrochen, wobei die Durchbrechung als Drosselöffnung ausgeführt ist. Die Kompensationswand 3 besteht im Teilbereich 4, der axial beweglich in einem Luftspalt 5 zwischen zwei axial einander gegenüberliegenden Magnetspulen 6, 7 angeordnet ist, aus einem Werkstoff, der durch magnetische Kräfte bewegbar ist. Die Magnetspulen 6, 7 sind jeweils in einem Spulenträger 8, 9 starr gelagert und durch eine Wechselspannung erregbar. Der Teilbereich 4 der Kompensationswand 3, die Magnetspulen 6, 7 und der Luftspalt 5 sind gegenüber der Flüssigkeit innerhalb des Lagers abgedichtet.

Auf der dem Arbeitsraum 1 abgewandten Seite der Kompensationswand 3 ist ein Ausgleichsraum 12 angeordnet, der das verdrängte Flüssigkeitsvolumen aus Arbeitsraum 1 bei Einfederung des Gummilagers nahezu drucklos aufnimmt. Der Ausgleichsraum 12 ist durch eine rollbalgartig ausgebildete Begrenzungswand 13 aus gummielastischem Werkstoff gebildet. Die Magnetflüsse der Magnetspulen 6, 7 sind durch den Magnetfluß des Permanentmagneten 10 überlagert und synchron mit einer elektrischen Spannung derart angesteuert, daß der von dem Permanentmagneten 10 erzeugte Magnetfluß beiderseits der Kompensationswand 3 auf einer Seite verstärkt und auf der anderen Seite gleichzeitig in gleichem Maße geschwächt wird. Der Permanentmagnet 10 ist in diesem Ausführungsbeispiel innerhalb des Teilbereiches 4 der Kompensationswand 3 eingebettet und in radialer Richtung magnetisiert.

Diese Anordnung von Magnetspulen 6, 7 und Permanentmagnet 10, der in Spaltebene magnetisiert ist, ist in Figur 2 vergrößert dargestellt. Um den Magnetfluß in den Luftspalt 5 zu lenken sind in radialer Richtung innerhalb und außerhalb des Permanentmagneten 10 weichmagnetische Flußleitstücke angeordnet, die einstückig mit der Kompensationswand 3 ausgebildet sind. Die magnetische Anordnung umfaßt außerdem noch zwei Elektromagnete in axialer Richtung beiderseits der Kompensationswand 3, die ihrerseits von je einem weichmagnetischen Spulenträger 8, 9 teilweise umschlossen sind und aus je einer Magnetspule 6, 7 bestehen. Die Magnetspulen 6, 7 sind jeweils in einer in Richtung der Kompensationswand 3 geöffneten Nut der Spulenträger 8, 9 angeordnet. Die Magnetspulen 6, 7 werden von Wechselstrom durchflossen, der wie in diesem Ausführungsbeispiel gezeigt, gleichsinnig fließt. Die Kompensationswand 3 befindet sich innerhalb des Luftspaltes 5, der in axialer Richtung durch die Magnetspulen 6, 7 und die Spulenträger 8, 9 begrenzt wird, in einer Mittellage, wodurch die Spalte 5.1 und 5.2 eine übereinstimmende Weite aufweisen. Durch diese" magnetische Symmetrie" teilt sich der magnetische Fluß des Permanentmagneten $\emptyset_P$ in 2 gleichgroße Teilflüsse 0,5 $\emptyset_P$ auf, die in die Spalte 5.1 und 5.2 gelenkt werden. Die magnetischen Teilflüsse von jeweils 0,5 $\emptyset_P$ sind in Figur 2 mit den Bezugsziffern 14 und 15 versehen. Diesen permanentmagnetischen Teilflüssen 14, 15 überlagern sich die magnetischen Wechselflüsse $\emptyset S$, die von den Magnetspulen 6, 7 erzeugt werden. Die Magnetspulen 6, 7 sind von einem gleichgroßen Strom in gleichem Umlaufsinn um die Nut durchflossen. In diesem Ausführungsbeispiel ist es vorgesehen, daß die Magnetspulen 6, 7 die gleichen Abmessungen und die gleiche Windungszahl aufweisen und miteinander in Reihe geschaltet sind. Die von den Magnetspulen 6, 7 erzeugten magnetischen Wechselflüsse $\emptyset S$ sind mit den Bezugsziffern 16 und 17 versehen. Wie durch die symbolisch dargestellten magnetischen Flüsse 14, 15, 16, 17 aus Figur 2 zu erkennen ist, ergibt sich auf diese Weise in Spalt 5.2 eine Verstärkung des magnetischen Flusses, während in Spalt 5.1 eine Abschwächung eintritt. Diese Anordnung weist eine besonders gute Linearität zwischen dem Stromsignal auf die Magnetspulen 6, 7 und dem Kraftsignal auf die Kompensationswand 3 auf, so daß Entzerrungsmaßnahmen nicht erforderlich sind.

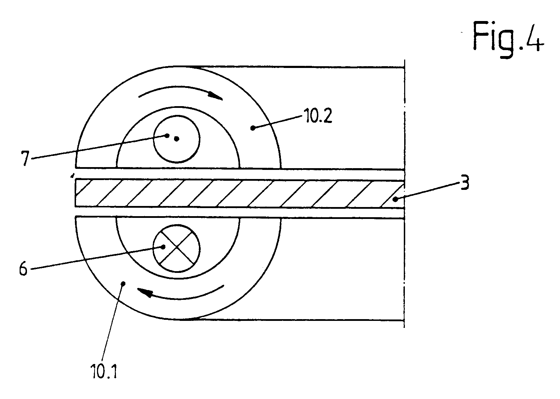

In den Figuren 3 und 4 ist der Permanentmagnet 10 jeweils durch zwei Teilmagnete 10.1, 10.2 gebildet, die axial beiderseits der Kompensationswand 3 in die Spulenträger 8, 9 eingebaut sind. Diese Ausgestaltung bedingt durch das wesentlich größere Magnetvolumen entweder mehr Kraft während der bestimmungsgemäßen Verwendung des Gummilagers oder die gewünschte Kraft auf die Kompensationswand 3 kann mit einem schwächeren und überproportional billigeren Magnetmaterial erreicht werden.

Das Ausführungsbeispiel nach Figur 3 ist für Anwendungsfälle vorgesehen, in denen der Bauraum in axialer Richtung begrenzt, in radialer Richtung aber ausreichend vorhanden ist. Die Teilmagnete 10.1., 10.2 sind in gleicher axialer Richtung magnetisiert, während die Magnetspulen 6, 7 gegensinnig vom Strom durchflossen sind. Der teilearme Aufbau sowie die Vorteile in wirtschaftlicher und fertigungstechnischer Hinsicht sind in diesem Ausführungsbeispiel von hervorzuhebender Bedeutung.

Ist demgegenüber bei weitgehend gleichen Abmessungen eine erhöhte Flußkonzentration am Luftspalt und damit eine größere Kraft auf die Kompensationswand 3 gefordert, besteht die Möglichkeit, die Teilmagneten 10.1, 10.2 in axialer Richtung nicht direkt an die Luftspalte 5.1, 5.2 angrenzen zu lassen sondern zwischen die Teilmagnete 10.1, 10.2 und die Spalte 5.1, 5.2 ein zusätzliches Teil aus weichmagnetischem Werkstoff einzusetzen, das den Querschnitt des magnetischen Flusses zu den Spalten 5.1, 5.2 hin herabsetzt. Dem etwas vergrößerten Bauaufwand steht dann eine vergrößerte Kraft auf die Kompensationswand 3 entgegen.

In Figur 4 ist eine Anordnung gezeigt, in denen die Teilmagnete 10.1, 10.2 ohne weichmagnetische Flußleitstücke auskommen. Die Magnetspulen 6, 7 sind in diesem Ausführungsbeispiel nicht von Spulenträgern aus weichmagnetischem Werkstoff umschlossen, sondern die Spulenträger sind durch die Permanent- Teilmagnete 10.1, 10.2 gebildet, die einen bogenförmigen Querschnitt aufweisen. Die Permanent- Teilmagnete 10.1, 10.2 sind entsprechend ihrer Form bogenförmig magnetisiert. Die Magnetspulen 6, 7 sind gegensinnig von Strom durchflossen. Das Magnetmaterial der Permanent- Teilmagnete 10.1, 10.2 kann beispielsweise durch kunststoffgebundene Magnete gebildet sein, deren Vorteil in der einfachen Herstellbarkeit durch ein Spritzgußverfahren zu sehen ist.

In den in den Figuren 3 und 4 dargestellten Anordnungen sind die Permanent- Teilmagnete 10.1, 10.2 so geschaltet, daß der permanentmagnetische Fluß die Kompensationswand 3 senkrecht zur Spaltebene durchsetzt. Dies hat den Vorteil, daß der Materialquerschnitt der Kompensationswand 3 niedrig sein kann, da kein permanentmagnetmagnetisch erregter Fluß in Spaltrichtung geleitet werden muß. Im Gegensatz zum Magnetkreis nach Figur 2 muß dann allerdings der Strom in den beiden Magnetspulen 6, 7 gegensinnig fließen.

## Patentansprüche

1. Gummilager, bei dem ein flüssigkeitsgefüllter Arbeitsraum (1) an zumindest einer Stelle seiner Wandung durch eine Blähfeder (2) und an zumindest einer anderen Stelle seiner Wand durch eine in Richtung des Arbeitsraumes (1) hin- und herbewegbare Kompensationswand (3) begrenzt ist, wobei die Kompensationswand (3) zumindest teilweise aus einem durch magnetische Kräfte bewegbaren Werkstoff besteht und mit einem Teilbereich (4) relativ beweglich in einen Luftspalt (5) zwischen ein aus zwei einander gegenüberliegenden Magnetspulen (6, 7) gebildetes Spulenpaar hineinragt, die in zwei Spulenträgern (8, 9) starr gelagert und durch eine elektrische Wechselspannung erregbar sind, dadurch gekennzeichnet, daß die Magnetflüsse der Magnetspulen (6, 7) in dem Luftspalt (5) durch den Magnetfluß zumindest eines Permanentmagneten (10) mit zeitlich nicht veränderlichem Fluß überlagert sind und daß die Magnetspulen (6, 7) synchron mit einer elektrischen Spannung derart angesteuert sind, daß der von dem Permanentmagneten (10) erzeugte Magnetfluß beiderseits der Kompensationswand (3) alternierend auf jeweils einer Seite verstärkt und auf der anderen geschwächt wird.

2. Gummilager nach Anspruch 1, dadurch gekennzeichnet, daß der Permanentmagnet (10) zumindest einen Teilmagneten (10.1) umfaßt, der innerhalb eines Teilbereiches (4) in die Kompensationswand (3) eingebettet ist.

3. Gummilager nach Anspruch 1, dadurch gekennzeichnet, daß der Permanentmagnet (10) durch zwei Teilmagnete (10.1, 10.2) gebildet ist, die mit den Magnetspulen (6, 7) jeweils zu einer in sich geschlossenen Baueinheit zusammengefaßt sind.

4. Gummilager nach Anspruch 3, dadurch gekennzeichnet, daß die Baueinheit zumindest ein magnetisches Rückschlußteil aus einem weichmagnetischen Werkstoff umfaßt.

5. Gummilager nach Anspruch 1 bis 4, dadurch gekennzeichnet, daß die Teilbereiche (4), die Magnetspulen (6, 7) und der Permanentmagnet (10) die Kompensationswand (3) im Bereich des Außenumfangs umschließen.

## Claims

1. A rubber bearing in which a fluid-filled working space (1) is bounded at least at one place on its wall by a swelling spring (2) and, at least at another place on its wall, by a compensation wall (3) which can be moved back and forth in the direction of the working space (1), the compensation wall (3) being composed at least partially of a material which can be moved by magnetic forces and protruding with a partial region (4) in a relatively movable manner into an air gap (5) between a pair of coils which are formed from two mutually opposite magnetic coils (6, 7), are mounted rigidly in two coil carriers (8, 9) and can be excited by an electrical alternating voltage, characterized in that the magnetic fluxes of the magnetic coils (6, 7) in the air gap (5) are superimposed by the magnetic flux of at least one permanent magnet (10) with a temporally invariable flux, and in that the magnetic coils (6, 7) are actuated synchronously with an electrical voltage in such a way that the magnetic flux produced by the permanent magnet (10) on both sides of the compensation wall (3) is alternately reinforced in each case on one side and weakened on the other.

2. A rubber bearing according to claim 1, characterized in that the permanent magnet (10) comprises at least one partial magnet (10.1) which is embedded in the compensation wall (3) within a partial region (4).

3. A rubber bearing according to claim 1, characterized in that the permanent magnet (10) is formed by two partial magnets (10.1, 10.2) which are combined with the magnetic coils (6, 7) in each case to form a construction unit which is closed in itself.

4. A rubber bearing according to claim 3, characterized in that the construction unit comprises at least one magnetic return part of a low-retentivity material.

5. A rubber bearing according to any of claims 1 to 4, characterized in that the partial regions (4), the magnetic coils (6, 7) and the permanent magnet (10) enclose the compensation wall (3) in the region of the external circumference.

## Revendications

1. Support caoutchouc dans lequel une chambre de travail (1) remplie de liquide est limitée, en au moins un endroit de sa paroi, par un ressort expansable (2) et, en au moins un autre endroit de sa paroi, par une cloison de compensation (3) pouvant aller et venir en direction de la chambre de travail (1), la cloison de compensation (3) étant constituée, au moins partiellement, d'un matériau mobile sous l'effet de forces magnétiques et une portion (4) de cette cloison s'étendant de manière relativement mobile dans un entrefer (5) situé entre une paire de bobines formée par deux bobines d'excitation (6, 7) situées à l'opposé l'une de l'autre, qui sont montées fixement dans deux porte-bobines (8, 9) et peuvent être excitées par une tension électrique alternative, ce support caoutchouc étant caractérisé en ce que les flux magnétiques des bobines d'excitation (6, 7) interfèrent, dans l'entrefer (5), avec le flux magnétique d'au moins un aimant permanent (10) à flux invariable dans le temps, et que les bobines d'excitation (6, 7) sont commandées de manière synchrone par une tension électrique, de manière à ce que le flux magnétique engendré par l'aimant permanent (10) soit, de manière alternante des deux côtés de la cloison de compensation, renforcé sur un côté respectif et affaibli sur l'autre côté.

2. Support caoutchouc selon la revendication 1, caractérisé en ce que l'aimant permanent (10) comprend au moins une partie d'aimant (10.1) qui est insérée à l'intérieur d'une portion (4) dans la cloison de compensation (3).

3. Support caoutchouc selon la revendication 1, caractérisé en ce que l'aimant permanent (10) est formé par deux parties d'aimant (10.1, 10.2) qui sont réunies avec les bobines d'excitation (6, 7) pour former respectivement une unité modulaire fermée en soi.

4. Support caoutchouc selon la revendication 3, caractérisé en ce que l'unité modulaire comprend au moins une partie de culasse magnétique composée d'un matériau magnétique doux.

5. Support caoutchouc selon les revendications 1 à 4, caractérisé en ce que les portions (4), les bobines d'excitation (6,7) et l'aimant permanent (10) entourent la cloison de compensation (3) dans la région de sa circonférence externe.

Fig.1

Fig.2

Fig.3

Fig.4